# EUROPÄISCHE PATENTSCHRIFT

(11) **EP 3 954 932 B1**
(45) Veröffentlichungstag und Bekanntmachung des Hinweises auf die Patenterteilung: **09.07.2025**
(21) Anmeldenummer: 21167796.8
(22) Anmeldetag: 12.04.2021
(51) Int. Cl.: F16L 13/14

(54) **VORRICHTUNG ZUM ANSCHLUSS EINES VERBUNDROHRES MIT METALLISCHER INNENLAGE**
DEVICE FOR CONNECTING A COMPOSITE PIPE WITH A METALLIC INNER LAYER
DISPOSITIF DE RACCORDEMENT D'UN TUYAU COMPOSITE POURVU DE COUCHE INTERNE MÉTALLIQUE

(30) Priorität: 12.08.2020 AT 506742020
(43) Veröffentlichungstag der Anmeldung: 16.02.2022
(73) Patentinhaber: KE KELIT GmbH, 4020 Linz (AT)
(72) Erfinder: Ratschmann, Elmar, 4202 Hellmonsödt (AT); Linzner, Werner, 4616 Weißkirchen (AT)
(74) Vertreter: Hübscher & Partner Patentanwälte GmbH

(56) Entgegenhaltungen:
- EP-B1- 0 390 747
- EP-B1- 1 112 457
- EP-B1- 1 564 469
- DE-A1- 102005 023 751
- DE-U1- 29 721 224

## Beschreibung

Die Erfindung bezieht sich auf eine Vorrichtung zum Anschluss eines Verbundrohres mit metallischer Lage an einen Anschlussnippel eines Pressfittings, mit einem profilierten Anschlussnippel, der wenigstens einen Dichtring in einer Dichtringnut des Anschlussnippels aufnimmt, , wobei der Anschlussnippel einen profilierten zylinderförmigen Grundkörper aufweist, und wobei in Achsrichtung des Anschlussnippels gesehen, beidseits der Dichtringnut mit dem Dichtring, ein zylinderförmiger Mantelabschnitt des Grundkörpers anschließt, der an wenigstens einer der Dichtringnut abgewandten Seite von einer Rohraufnahmenut begrenzt ist und wobei die Stegbreite des zylinderförmigen Mantelabschnittes größer gleich die Dichtringnutbreite ist.

Eine derartige Vorrichtung ist beispielsweise aus der DE29721224U1 bekannt. Eine weitere Alternative offenbart die EP 0 390 747 B1. Das Pressen ist derzeit eine vorherrschende Verbindungstechnik bei Heizungs- und Sanitärinstallationen. Kupfer-, Stahl- oder Mehrschichtverbundrohre werden mit Pressfittings unter Zuhilfenahme von handbetätigten Presszangen oder elektrischen Pressmaschinen verpresst. Beispiele für derartige Pressfittings sind beispielsweise aus der EP 2 672 159 A, der EP 2 154 411 A und der AT 507 566 A bekannt. Vor einem Verpressen werden die Rohre an den Anschlussnippel angesetzt. Ein in eine Dichtringnut des Anschlussnippels eingesetzter Dichtring sorgt in weiterer Folge für eine ordnungsgemäße Dichtheit. Bei einem Verpressen des Rohranschlusses am Anschlussnippel dringt Rohrmaterial in Anschlußnippelprofile, beispielsweise Rillen oder Krallen, ein und sorgt damit für eine Abzugssicherung, also einen sicheren Halt des Rohres am Anschlussnippel.

Bekannte Fittings eignen sich gut für Mehrschichtverbundrohre mit metallischem Kern, insbesondere einer Aluminiummittellage und mit einer Innenschicht und einer Außenschicht aus Kunststoff. Allerdings sind diese Fittings nicht für Mehrschichtverbundrohre mit metallischer Innenschicht, insbesondere einer Edelstahlinnenlage und einer Außenschicht aus Kunststoff geeignet. Bei einem Verpressen wirft die metallische Innenschicht, insbesondere eine Edelstahlschicht, Falten, die in axialer Richtung verlaufende und über den Umfang verteilte, offene Kanäle bilden. Diese Falten entstehen in jenen Bereichen, in denen das Rohr in radialer Richtung verformt wird und bewirken, dass der Fitting trotz eines Einsatzes von Dichtringen nicht dicht zu bekommen ist, da jede Falte einem offenen Strömungskanal entspricht. Je mehr freies Volumen zwischen Anschlussnippel und metallischer Innenschicht ist, desto größer ist die Neigung zur Faltenbildung. Zu scharfkantige Anschlußnippelprofile können zudem die sehr dünne metallische Innenschicht der Verbundrohre durchstoßen und somit beschädigen. Verbundrohre mit metallischer Innenlage offenbart beispielsweise die DE 10 2005 023751 A1.

Der Erfindung liegt somit die Aufgabe zugrunde, eine einfache Vorrichtung der eingangs geschilderten Art zu schaffen, die eine dichte Pressverbindung eines Verbundrohres mit metallischer Innenlage mit einem Anschlussnippel der Vorrichtung gestattet.

Die Erfindung löst die gestellte Aufgabe dadurch, dass als Verbundrohr ein Mehrschichtverbundrohr mit metallischer Innenlage und einer Außenschicht aus Kunststoff vorgesehen ist und dass die Rohraufnahmenut kreisförmig ausgebildet ist.

Wesentlich ist, dass der Anschlussnippel einen profilierten zylinderförmigen Grundkörper aufweist, dessen Außendurchmesser möglichst exakt an den Innendurchmesser des Verbundrohres mit metallischer Innenlage angepasst ist. Es soll gerade so viel Spiel bzw. eine Übergangspassung zwischen Verbundrohr und Anschlußnippel vorherrschen, dass das Rohr gewaltfrei auf den Anschlussnippel geschoben werden kann. In Achsrichtung des Anschlussnippels gesehen schließt beidseits der Dichtringnut mit dem Dichtring ein zylinderförmiger Mantelabschnitt des Grundkörpers an. Diese zylinderförmigen Mantelabschnitte des Grundkörpers bilden beim Pressen einen Pressitz für das Rohr das beim Pressen im Bereich der zylinderförmigen Mantelabschnitte verformungsfrei gehalten wird. Das Rohr wird in diesen Bereichen somit nicht radial gestaucht. Der zylinderförmige Mantelabschnitt des Grundkörpers ist an seiner der Dichtringnut abgewandten Seite von einer Rohraufnahmenut oder wiederum einer Dichtringnut begrenzt. Es können somit zwei oder mehrere Dichtringnuten vorgesehen sein. Allerdings ist stets wenigstens eine zusätzliche Rohraufnahmenut vorgesehen, welche an einen zylinderförmigen Mantelabschnitt des Grundkörpers anschließt und vorzugsweise zwischen zwei zylinderförmigen Mantelabschnitt des Grundkörpers vorgesehen ist.

Rohrmaterial dringt beim Verpressen in diese Rohraufnahmenut ein, welche insbesondere über den Anschlussnippelumfang umläuft. In diesem Bereich der Rohraufnahmenut kann das Rohr zwecks Abzugssicherung unter Faltenbildung eindringen. Da allerdings beidseits der Dichtringnut ein zylinderförmiger Mantelabschnitt des Grundkörpers vorgesehen ist, der einen Pressitz für das Rohr beim Pressen bildet, können sich die Falten nicht in diesen zylinderförmigen Mantelabschnitten des Grundkörpers ausbilden, womit die Dichtheit der Vorrichtung und eine feste Verbindung zwischen Rohr und Anschlussnippel sichergestellt ist. Die Funktion des Dichtringes bleibt voll erhalten. Zudem wirken die zylinderförmigen Mantelabschnitte des Grundkörpers im Zusammenspiel mit der metallischen Innenlage als Spaltdichtung, womit der Dichtring entlastet wird. Um eine Ausbildung von Falten in den zylinderförmigen Mantelabschnitten sicher zu vermeiden ist die Stegbreite des zylinderförmigen Mantelabschnittes größer gleich der Dichtringnutbreite.

Um für einen sicheren Halt des verpressten Rohres auf der Vorrichtung zu sorgen kann die Rohraufnahmenutbreite größer/gleich der Dichtringnutbreite sein. Erfindungsgemäß ist die Rohraufnahmenut kreisförmig ausgebildet. Zudem empfiehlt es sich, wenn die tiefe Rohraufnahmenut kleiner ist als die Tiefe der Dichtringnut ist. Damit kann die Faltenbildung im Bereich der Rohraufnahmenut zudem in annehmbaren Grenzen gehalten werden.

Sind wenigstens 15%, vorzugsweise wenigstens 30%, der Anschlussnippellänge von einem zylinderförmigen Mantelabschnitt des Grundkörpers gebildet, so ergibt sich neben dem Dichtring eine hoch wirksame Spaltdichtung.

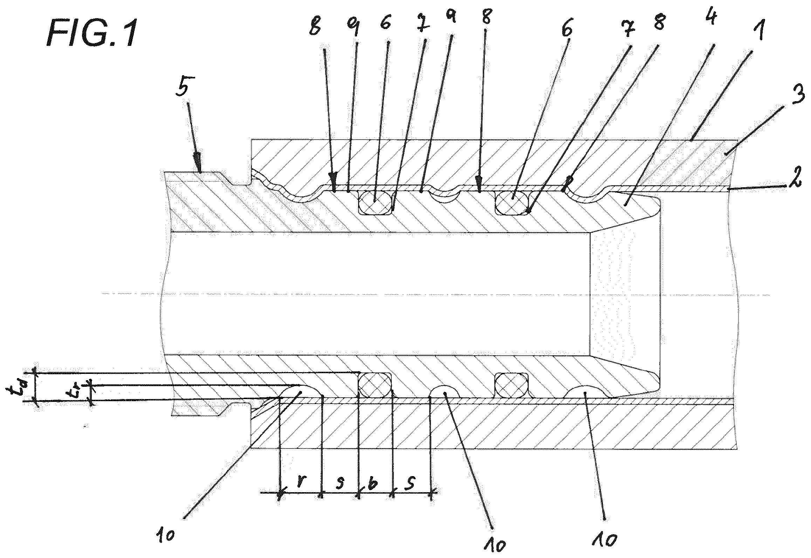

In der Zeichnung ist der Erfindungsgegenstand beispielsweise dargestellt. Es zeigen
- Fig. 1: einen Anschlussnippel mit aufgesetztem Rohr in verpresstem Zustand oberhalb der Rohrachse und in unverpresstem Zustand unterhalb der Rohrachse und

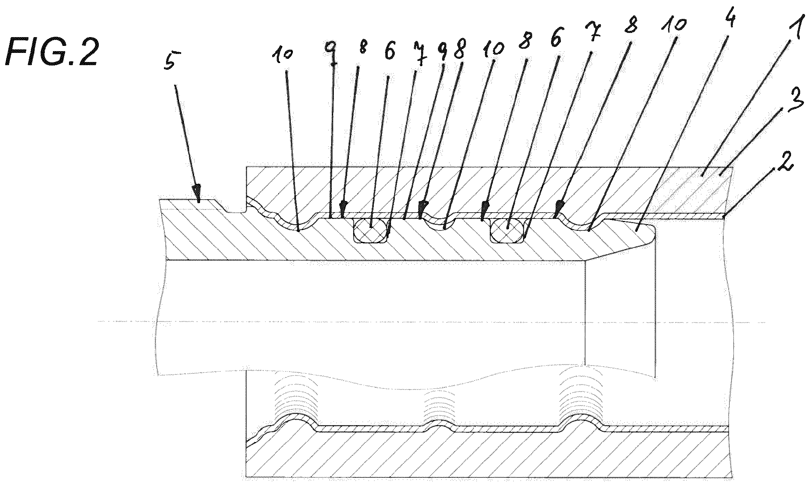

- Fig. 2: die Vorrichtung aus Fig. 1 mit teilweise ausgeschnittenem Anschlussnippel unterhalb der Rohrachse.

Die erfindungsgemäße Vorrichtung zum Anschluss eines Verbundrohres 1 mit metallischer Innenlage 2 und Kunststoffaußenlage 3, die über einen Haftvermittler verbunden sind, an einen Anschlussnippel 4 eines Pressfittings 5 umfasst einen profilierten Anschlussnippel 4, der wenigstens einen Dichtring 6 in einer Dichtringnut 7 des Anschlussnippels aufnimmt.

Um Verbundrohre mit metallischer Innenlage 2 sicher und dicht mit dem Anschlussnippel 4 verpressen zu können, weist der Anschlussnippel 4 einen profilierten zylinderförmigen Grundkörper 8 auf, wobei in Achsrichtung des Anschlussnippels 4 gesehen, beidseits der Dichtringnut 7 mit dem Dichtring 6, ein zylinderförmiger Mantelabschnitt 9 des Grundkörpers 8 anschließt, der an seiner der Dichtringnut 7 abgewandten Seite von einer Rohraufnahmenut 10 begrenzt ist.

Die Stegbreite s des zylinderförmigen Mantelabschnittes 9 ist im dargestellten Ausführungsbeispiel etwas größer als Dichtringnutbreite b. Die Rohraufnahmenutbreite r ist wiederum größer als die Dichtringnutbreite b. Zudem ist die Rohraufnahmenut 10 kreisförmig ausgebildet und ist die T/8iefe der Rohraufnahmenut tᵣ kleiner ist als die Tiefe t_{d} der Dichtringnut 7.

Die Stärke der metallischen Edelstahlinnenlage des Verbundrohres 1 liegt insbesondere zwischen 70-100µm, daran schließt über einen Haftvermittler eine polymere Deckschicht an die beispielsweise zwischen 1,5 und 3,5, insbesondere zwischen 2,00-2,50 mm, stark ist und aus Polyethylen mit erhöhter Temperaturbeständigkeit (PE-RT) besteht. Die Vorrichtung zum Anschluss des Verbundrohres 1 und der Anschlussnippel 4 können aus Metall, insbesondere ebenfalls Edelstahl, oder geeignetem Kunststoff bestehen.

## Patentansprüche

1. Vorrichtung zum Anschluss eines Verbundrohres (1) mit metallischer Lage an einen Anschlussnippel (4) eines Pressfittings (5), mit einem Verbundrohr (1), mit einem profilierten Anschlussnippel (4), der wenigstens einen Dichtring (6) in einer Dichtringnut (7) des Anschlussnippels aufnimmt, wobei der Anschlussnippel (4) einen profilierten zylinderförmigen Grundkörper (8) aufweist, und wobei in Achsrichtung des Anschlussnippels (4) gesehen, beidseits der Dichtringnut (7) mit dem Dichtring (6), ein zylinderförmiger Mantelabschnitt (9) des Grundkörpers (8) anschließt, der an wenigstens einer der Dichtringnut (7) abgewandten Seite von einer Rohraufnahmenut (10) begrenzt ist und wobei die Stegbreite (s) des zylinderförmigen Mantelabschnittes (9) größer gleich die Dichtringnutbreite (b) ist, **dadurch gekennzeichnet, dass** als Verbundrohr (1) ein Mehrschichtverbundrohr mit metallischer Innenlage (2) und einer Außenschicht aus Kunststoff (3) vorgesehen ist und dass die Rohraufnahmenut (10) im Längsschnitt kreisförmig ausgebildet ist.

2. Vorrichtung nach Anspruch 1, **dadurch gekennzeichnet, dass** die Rohraufnahmenutbreite (r) größer/gleich der Dichtringnutbreite (b) ist.

3. Vorrichtung nach Anspruch 1 oder 2, **dadurch gekennzeichnet, dass** die Tiefe (tᵣ) der Rohraufnahmenut kleiner ist als die Tiefe (t_{d}) der Dichtringnut (7).

4. Vorrichtung nach einem der Ansprüche 1 bis 3, **dadurch gekennzeichnet, dass** wenigstens 15%, vorzugsweise wenigstens 30%, der Anschlussnippellänge von einem zylinderförmigen Mantelabschnitt (9) des Grundkörpers (8) gebildet sind.

## Claims

1. Device for connecting a composite pipe (1) with a metallic layer to a connecting nipple (4) of a press fitting (5), with a composite pipe (1), with a profiled connecting nipple (4) which receives at least one sealing ring (6) in a sealing ring groove (7) of the connecting nipple, wherein the connecting nipple (4) has a profiled cylindrical base body (8), and wherein, viewed in the axial direction of the connecting nipple (4), on both sides of the sealing ring groove (7) with the sealing ring (6) a cylindrical jacket section (9) of the base body (8) adjoins, which is bounded on at least one side facing away from the sealing ring groove (7) by a pipe receiving groove (10) and wherein the web width (s) of the cylindrical jacket section (9) is greater than or equal to the sealing ring groove width (b), **characterized, in that** the composite pipe (1) is a multilayer composite pipe with a metallic inner layer (2) and an outer layer of plastic (3) and **in that** the pipe receiving groove (10) is circular in longitudinal section.

2. Device according to claim 1, **characterized in that** the pipe receiving groove width (r) is greater than or equal to the sealing ring groove width (b).

3. Device according to claim 1 or 2, **characterized in that** the depth (tᵣ) of the pipe receiving groove is smaller than the depth (t_{d}) of the sealing ring groove (7).

4. Device according to one of claims 1 to 3, **characterized in that** at least 15%, preferably at least 30%, of the connecting nipple length is formed by a cylindrical jacket section (9) of the base body (8).

## Revendications

1. Dispositif destiné à raccorder un tuyau composite (1) pourvu d'une couche métallique à un ajutage de raccordement (4) d'une douille (5), avec un tuyau composite (1), avec un ajutage de raccordement profilé (4) qui reçoit au moins une bague d'étanchéité (6) dans une rainure de bague d'étanchéité (7) de l'ajutage de raccordement, dans lequel l'ajutage de raccordement (4) présente un corps de base cylindrique profilé (8) et dans lequel, en regardant dans la direction axiale de l'ajutage de raccordement (4), de part et d'autre de la rainure de bague d'étanchéité (7) avec la bague d'étanchéité (6), une section de revêtement cylindrique (9) du corps de base (8) est raccordée et délimitée, sur au moins un côté opposé à la rainure de bague d'étanchéité (7), par une rainure de réception de tuyau (10) et dans lequel la largeur d'âme (s) de la section de revêtement cylindrique (9) est supérieure ou égale à la largeur de rainure de bague d'étanchéité (b), **caractérisé en ce qu'**il est prévu comme tuyau composite (1) un tuyau composite à plusieurs couches avec une couche intérieure métallique (2) et une couche extérieure en matière plastique (3) et **en ce que** la rainure de réception de tuyau (10) est conçue de manière circulaire en coupe longitudinale.

2. Dispositif selon la revendication 1, **caractérisé en ce que** la largeur de rainure de réception de tuyau (r) est supérieure ou égale à la largeur de rainure de bague d'étanchéité (b).

3. Dispositif selon la revendication 1 ou 2, **caractérisé en ce que** la profondeur (tᵣ) de la rainure de réception de tuyau est inférieure à la profondeur (t_{d}) de la rainure de bague d'étanchéité (7).

4. Dispositif selon l'une des revendications 1 à 3, **caractérisé en ce qu'**au moins 15 %, de préférence au moins 30 %, de la longueur d'ajutage de raccordement est formée par une section de revêtement cylindrique (9) du corps de base (8).
